Europäisches Patentamt

European Patent Office

Office européen des brevets

(11) Veröffentlichungsnummer: **0 308 821**
**A1**

(12) **EUROPÄISCHE PATENTANMELDUNG**

(21) Anmeldenummer: 88115173.2

(22) Anmeldetag: 16.09.88

(51) Int. Cl.⁴ **B65B 21/18 , B65G 1/06**

(30) Priorität: 25.09.87 DE 3732283

(43) Veröffentlichungstag der Anmeldung:
29.03.89 Patentblatt 89/13

(84) Benannte Vertragsstaaten:
AT CH DE ES FR LI

(71) Anmelder: STEINLE MASCHINENFABRIK GMBH
Ulmer Strasse 246
D-8900 Augsburg(DE)

(72) Erfinder: Steinle, Rudolf
Franz-Liszt-Strasse 3
D-8902 Neusäss(DE)

(74) Vertreter: Munk, Ludwig, Dipl.-Ing.
Patentanwalt Prinzregentenstrasse 1
D-8900 Augsburg(DE)

(54) Vorrichtung zum Ein- und Auspacken.

(57) Bei einer Vorrichtung zum Ein- und Auspacken von gebindeweise in zugeordneten Behältern, wie Kästen, Kartons oder dergleichen, aufnehmbaren Gegenständen, wie Flaschen, Gläsern, Dosen oder dergleichen, mit wenigstens einem mit Greifern (6) versehenen, einen Packhub ausführenden Greiferkopf (7), der auf einem zugeordneten Tragrahmen (8) lösbar festlegbar ist, der an einem bewegbar auf einem Ständer (11) gelagerten, mittels wenigstens einer Antriebseinrichtung (14a, 14b) antreibbaren Tragarm (9) befestigt ist, werden dadurch ein einfacher Greiferkopfwechsel sowie ein einfacher Aufbau gewährleistet, daß ein dem Tragrahmen (8) benachbartes Magazin (15) Verwendung findet, das mehrere, stationäre Gefache (16) für jeweils wenigstens einen Greiferkopf (7) aufweist und dessen Erstreckung innerhalb des Bewegungsfelds des benachbarten Tragrahmens (8) liegt.

FIG 1

## Vorrichtung zum Ein- und Auspacken

Die Erfindung betrifft eine Vorrichtung zum Ein- und Auspacken von gebindeweise in zugeordneten Behältern, wie Kästen, Kartons oder dergleichen, aufnehmbaren Gegenständen, wie Flaschen, Gläsern, Dosen oder dergleichen, mit wenigstens einem mit Greifern versehenen, einen Packhub ausführenden Greiferkopf, der auf einem zugeordneten Tragrahmen lösbar festlegbar ist, der an einem bewegbar auf einem Ständer gelagerten, mittels wenigstens einer Antriebseinrichtung antreibbaren Arm befestigt ist.

Anordnungen dieser Art können durch Auswechseln des lösbaren Greiferkopfes an die bei verschiedenen Gegenständen, beispielsweise verschiedenen Flaschen- und/oder Kastengrößen, vorliegenden Verhältnisse angepaßt werden, was eine universelle Verwendbarkeit ergibt. Das Wechseln der Greiferköpfe stellt bisher jedoch eine sehr zeitaufwendige und anstrengende Tätigkeit dar, insbesondere weil die Greiferköpfe für die verschiedenen Sorten mangels anderer Möglichkeiten vielfach in größerer Entfernung vom Tragrahmen aufbewahrt werden.

Es sind zwar auch schon Anordnungen eingangs erwähnter Art mit eingebautem Greiferkopfspeicher bekanntgeworden, wobei der Greiferkopfspeicher mehrere, mittels zugeordneter Antriebseinrichtungen bewegbare Böden aufweist, die zum Wechsel des Greiferkopfes in die gewünschte Position gebracht werden können. Anordnungen dieser Art benötigen jedoch viel Platz und erfordern infolge der den Böden zugeordneten Antriebseinrichtung auch einen sehr hohen baulichen Aufwand.

Hiervon ausgehend ist es daher die Aufgabe der vorliegenden Erfindung, eine Anordnung eingangs erwähnter Art mit einfachen und kostengünstigen Mitteln so zu verbessern, daß der Greiferkopfwechsel schnell und leicht durchführbar ist und daß dennoch der erforderliche bauliche Aufwand gering bleibt.

Die Lösung dieser Aufgabe gelingt in überraschend einfacher Weise durch Verwendung wenigstens eines dem Tragrahmen benachbarten Magazins, das mehrere, stationäre Gefache für jeweils wenigstens einen Greiferkopf aufweist und dessen Erstreckung innerhalb des Bewegungsfelds des bewegbaren Tragrahmens liegt, wobei das Bewegungsfeld des Tragrahmens größer als der Packhub ist und zumindest dem Abstand der beiden äußersten Gefache des Magazins entspricht.

Diese Maßnahmen stellen sicher, daß die einzelnen Gefache des Greiferkopfmagazins durch den zur Durchführung des Packhubs ohnehin mit einer Antriebseinrichtung zusammenwirkenden Tragrahmen angefahren werden können. Die zur Durchführung des Packhubs ohnehin vorhandene Antriebseinrichtung wird hierbei daher in vorteilhafter Weise gleichzeitig zur Durchführung des Anfahrhubs verwendet. Um ein eine große Höhe aufweisendes Magazin bedienen zu können, ist es daher lediglich erforderlich, den Maschinenständer zu erhöhen, was ohne erheblichen Aufwand möglich ist. Die Gefache selbst benötigen hierbei keinerlei Führung und Antrieb, sondern können einfach stationär angeordnet sein. Die eingestellten Greiferköpfe sind dabei aufgrund ihres Gewichts bereits ausreichend fixiert. Eine zusätzliche Fixierung ist in vorteilhafter Weise nicht erforderlich. Dies wirkt sich vorteilhaft auf die Bedienungsfreundlichkeit aus und gewährleistet zudem, daß die Greiferköpfe für Reparaturzwecke etc. gut zugänglich bzw. entnehmbar sind.

Eine zweckmäßige Fortbildung kann darin bestehen, daß jedem Gefach des Magazins ein vorwählbarer Hub der dem Arm zugeordneten Antriebseinrichtung zugeordnet ist. Diese Maßnahmen ermöglichen eine einfache Vorwahl jedes gewünschten Anfahrhubs und ergeben somit eine sehr hohe Bedienungsfreundlichkeit. In weiterer Ausgestaltung der übergeordneten Maßnahmen kann das Magazin mit seiner Schmalseite der Schmalseite des Tragrahmens benachbart sein. Dies ergibt eine besonders platzsparende und übersichtliche Anordnung, da das Magazin dabei vorteilhaft im Bereich des Maschinenein- bzw. -auslaufs einen Kasten- und/oder Flaschentransporteur übergreifend angeordnet sein kann.

In weiterer Fortbildung der übergeordneten Maßnahme können die Gefache und/oder der Tragrahmen mit wenigstens einer, vorzugsweise als antreibbare Rolle ausgebildeten Ausschubeinrichtung versehen sein. Diese Maßnahmen erleichtern eine Mechanisierung bzw. Automatisierung des Greiferkopfwechsels.

Weitere vorteilhafte Ausgestaltungen und zweckmäßige Fortbildungen der übergeordneten Maßnahmen ergeben sich aus den restlichen Unteransprüchen.

Nachstehend wird ein Ausführungsbeispiel der Erfindung anhand der Zeichnung näher erläutert.

Hierbei zeigen:

Figur 1 eine Frontansicht eines Flaschenein- und Auspackers mit zugeordnetem Stationärmagazin und

Figur 2 eine Seitenansicht der Anordnung gemäß Figur 1.

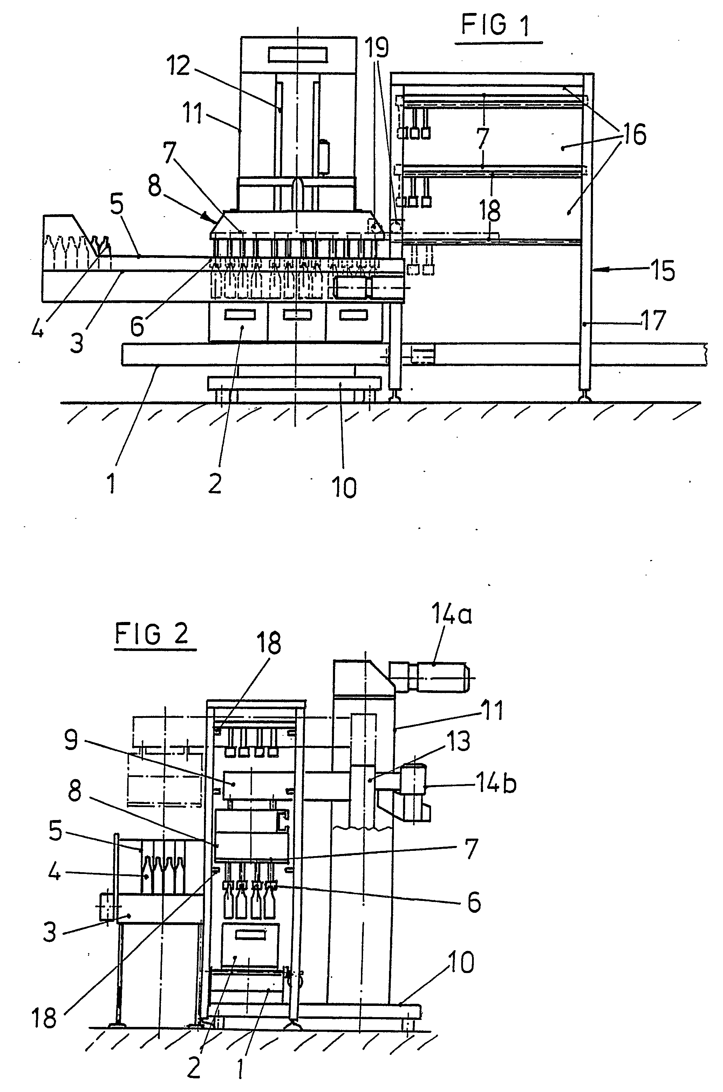

Ein Flaschenein- bzw. -auspacker der den Figuren 1 und 2 zugrundeliegenden Art besitzt einen Rollengang 1 als Transporteur von Kästen 2 sowie ein hiergegen nach oben seitlich versetztes Förderband 3 als Transporteur von Flaschen 4, die aus den Kästen 2 entnommen oder in die Kästen 2 eingestellt werden sollen. Im Bereich des Förderbands 3 sind zur Erzielung der gewünschten Flaschenreihen Führungen 5 vorgesehen.

Zur Handhabung der Flaschen 4 sind als Sauger ausgebildete Greifer 6 vorgesehen. Diese sind satzweise an einem zugeordneten Greiferkopf 7 aufgenommen. Das Positionierungsmuster der Greifer 6 entspricht dabei der Unterteilung der Kästen 2. Im dargestellten Ausführungsbeispiel erstreckt sich der Greiferkopf 7 über drei Kästen, so daß mit einem Packhub des Greiferkopfes 7 drei Kästen gleichzeitig entleert bzw. befüllt werden können.

Der etwa plattenförmige Greiferkopf 7 ist im Betrieb auf einer zugeordneten Aufhängung in Form eines Tragrahmens 8 befestigt, der seinerseits an einem Tragarm 9 aufgehängt ist, der auf einem portalförmigen, mit einem Fuß 10 versehenen Ständer 11 aufgenommen und zur Durchführung des Packhubs auf- und ab-, sowie hin- und herbewegbar ist. Der Ständer 11 ist mit Längsführungen 12 für den Tragarm 9 bzw. einen diesem zugeordneten Kreuzschlitten 13 versehen. Die Bewerkstelligung der hin- und hergehenden bzw. auf- und abgehenden Bewegungen des Tragarms 9 erfolgt durch zugeordnete Einzelantriebe 14a bzw. 14b.

Der Greiferkopf 7 ist, wie oben bereits angedeutet wurde, lösbar am zugeordneten Tragrahmen 8 festlegbar. Je nach Kasten- und/oder Flaschenart können daher unterschiedliche Greiferköpfe zum Einsatz kommen. Die jeweils nicht benötigten Greiferköpfe werden in einem dem Tragrahmen 8 benachbarten, turmartigen Magazin 15 aufbewahrt, dass mehrere, stationär übereinander angeordnete, jeweils einen Greiferkopf 7 aufnehmende Gefache 16 aufweist. Zum Einlegen bzw. Herausnehmen eines Greiferkopfes wird das betreffende Gefach 16 durch den zur Durchführung des Packhubs hin- und her-, sowie auf- und abbewegbaren Tragrahmen 8 angefahren, d. h. der Tragrahmen 8 wird mit seiner Greiferkopfaufnahme zur Fluchtung mit der Greiferkopfaufnahme des betreffenden Gefachs 16 gebracht. Das Bewegungsfeld des Tragrahmens 8 und die Größe des Magazins 15 sind dabei so aufeinander abgestimmt, daß alle Gefache 16 durch den Tragrahmen 8 erreichbar sind. Im dargestellten Ausführungsbeispiel mit einem turmartigen Magazin 15 besitzen hierzu der Ständer 11 bzw. die vertikale Längsführung 12 eine solche Höhe, daß der maximal mögliche Hub des Tragarms 9 und damit des Tragrahmens 8 zumindest vom untersten zum obersten Gefach 16 reicht oder etwas weiter. Das dargestellte Magazin 15 besitzt drei übereinander angeordnete Gefache 16. Der hierbei benötigte maximale Anfahrhub geht über die Größe des normalerweise benötigten Packhubs hinaus. Dementsprechend sind der Ständer 11 und die vertikale Längsführung 12 über die für den normalen Packhub ausreichende Höhe hinaus vergrößert. Im Falle einer Nachrüstung bekannter Anordnungen mit einem Magazin der bei 15 angedeuteten Art ist dementsprechend lediglich der Ständer in der genannten Weise zu vergrößern.

Das Magazin 15 ist so angeordnet, daß es mit seiner Schmalseite der Schmalseite des Tragrahmens 8 zugewandt ist, so daß der Greiferkopf 7 einfach seitlich ein- und ausgeschoben werden kann. Der gegenseitige Abstand der einander zugewandten Kanten von Magazin 15 und Tragrahmen 8 kann dabei, wie Figur 1 anschaulich erkennen läßt, vergleichsweise klein sein, so daß dieser Abstand ohne zusätzliche Führungen etc. durch den aus- bzw. einzuschiebenden Greiferkopf 7 überbrückt wird. Im dargestellten Ausführungsbeispiel ist das Magazin im Bereich des Kasteneinlaufs, die als Kastentransporteur dienende Rollenbahn 1 übergreifend angeordnet, so daß der Tragrahmen 8 in seiner in Figur 2 mit durchgezogenen Linien angedeuteten, ständernahen Position in seitlicher Richtung auf das Magazin 15 ausgerichtet ist.

Das gerüstartig aufgebaute Magazin 15 besteht im dargestellten Ausführungsbeispiel aus stirnseitig angeordneten Portalträgern 17, die von der Rollenbahn 1 durchgriffen werden. Die die Rollenbahn 1 übergreifenden Gefache 16 werden durch an den Portalrahmen 7 befestigte, längs verlaufende Laufschienen 18 gebildet, auf denen der jeweils zugeordnete Greiferkopf 7 ähnlich wie auf dem Tragrahmen 8 mit seinen seitlichen Rändern aufliegt. Stirnseitig, zumindest im Bereich der dem Tragrahmen 8 zugewandten Stirnseite, sind die Gefache 16 offen.

Der Ein- und Ausschub der Greiferköpfe 7 kann von Hand erfolgen. Zur Erzielung einer hohen Leichtgängigkeit können die Laufschienen mit Laufrollen bestückt sein. Im dargestellten Ausführungsbeispiel sind der Tragrahmen und das Magazin 15 mit maschinellen Ausschubeinrichtungen in Form jeweils mindestens einer antreibbaren Rolle 19 versehen, die zum Eingriff mit dem jeweiligen Greiferkopf 7 bringbar ist. Zur Bewerkstelligung einer zuverlässigen Mitnahme können die zur Bildung der Ausschubeinrichtungen 19 vorgesehenen Rollen gummiert sein.

Der zum Anfahren der einzelnen Gefache 16 durchgeführte Anfahrhub kann manuell gesteuert werden. Zur Erzielung einer hohen Bedienungsfreundlichkeit wäre es aber auch denkbar, die der Antriebseinrichtung des Tragarms 9 zugeordnete Steuerung so auszubilden, daß der zum Anfahren der einzelnen Gefache jeweils benötigte Hub vorgewählt werden kann. Zur Erzielung einer weiteren Bedienungserleichterung könnte hiermit auch eine entsprechende Verstellung der Führungen 5 gekoppelt sein.

## Ansprüche

1. Vorrichtung zum Ein- und Auspacken von gebindeweise in zugeordneten Behältern, wie Kästen, Kartons oder dergleichen, aufnehmbaren Gegenständen, wie Flaschen, Gläsern, Dosen oder dergleichen, mit wenigstens einem mit Greifern (6) versehenen, einen Packhub ausführenden Greiferkopf (7), der auf einem zugeordneten Tragrahmen (8) lösbar festlegbar ist, der an einem bewegbar auf einem Ständer (11) gelagerten, mittels wenigstens einer Antriebseinrichtung (14a, 14b) antreibbaren Tragarm (9) befestigt ist, gekennzeichnet durch wenigstens ein dem Tragrahmen (8) benachbartes Magazin (15), das mehrere, stationäre Gefache (16) für jeweils wenigstens einen Greiferkopf (7) aufweist und dessen Erstreckung innerhalb des Bewegungsfelds des benachbarten Tragrahmens (8) liegt, wobei das Bewegungsfeld des Tragrahmens (8) größer als der Packhub ist und zumindest dem Abstand der beiden äußersten Gefache (16) des Magazins (15) entspricht.

2. Vorrichtung nach Anspruch 1, dadurch gekennzeichnet, daß jedem Gefach (16) des Magazins (15) ein vorwählbarer Hub der dem Tragarm (9) zugeordneten Antriebseinrichtung (14a, 14b) zugeordnet ist.

3. Vorrichtung nach einem der vorhergehenden Ansprüche, dadurch gekennzeichnet, daß das Magazin (15) als Turm mit übereinander angeordneten, durch vertikale Bewegung des Tragrahmens (8) anfahrbaren Gefachen (16) ausgebildet ist.

4. Vorrichtung nach Anspruch 3, dadurch gekennzeichnet, daß der den Tragrahmen (8) aufnehmende Tragarm (9) entlang einer vertikalen Längsführung (12) des Ständers (11) bewegbar ist, deren Länge zumindest dem Abstand der beiden äußersten Gefache (16) des Turms entspricht.

5. Vorrichtung nach einem der vorhergehenden Ansprüche, dadurch gekennzeichnet, daß das Magazin (15) mit einer Schmalseite einer Schmalseite des Tragrahmens (8) zugewandt ist.

6. Vorrichtung nach einem der vorhergehenden Ansprüche, dadurch gekennzeichnet, daß das Magazin (15) im Bereich des Maschinenein- bzw. -auslaufs vorzugsweise einen Behälter- oder Gegenstandstransporteur (Rollenbahn 1, Förderband 3) übergreifend angeordnet ist.

7. Vorrichtung nach einem der vorhergehenden Ansprüche, dadurch gekennzeichnet, daß die Gefache (16) mit Laufschienen (18) für den jeweils zugeordneten Greiferkopf (7) versehen sind.

8. Vorrichtung nach einem der vorhergehenden Ansprüche, dadurch gekennzeichnet, daß das Magazin (15), vorzugsweise jedes Gefach (16), mit wenigstens einer Ausschubeinrichtung (19) versehen ist.

9. Vorrichtung nach einem der vorhergehenden Ansprüche, dadurch gekennzeichnet, daß der Tragrahmen (8) mit wenigstens einer Ausschubeinrichtung (19) versehen ist.

10. Vorrichtung nach einem der vorhergehenden Ansprüche 8 bis 9, dadurch gekennzeichnet, daß die Ausschubeinrichtung (19) wenigstens eine antreibbare, vorzugsweise gummierte Rolle aufweist.

FIG 1

FIG 2

Europäisches
Patentamt

**EUROPÄISCHER RECHERCHENBERICHT**

Nummer der Anmeldung

EP 88 11 5173

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 010 686 (ENZINGER) * Seite 45, Zeile 7 - Seite 51, Zeile 22; Figuren 13-16 * --- | 1 | B 65 B 21/18 B 65 G 1/06 |
| A | DE-B-2 640 666 (H. SCHAEFER) * Spalte 3, Zeile 11 - Spalte 4, Zeile 41; Figuren * --- | 1 | |
| A | US-A-4 218 616 (W. LOOMER) * Spalte 4, Zeilen 30-65; Figuren 1-3 * ----- | 1 | |

**RECHERCHIERTE SACHGEBIETE (Int. Cl.4)**

B 65 B
B 65 G

Der vorliegende Recherchenbericht wurde für alle Patentansprüche erstellt

| Recherchenort | Abschlußdatum der Recherche | Prüfer |
|---|---|---|
| DEN HAAG | 27-12-1988 | JAGUSIAK A.H.G. |